# EUROPÄISCHE PATENTSCHRIFT

(11) **EP 0 542 170 B1**
(45) Veröffentlichungstag und Bekanntmachung des Hinweises auf die Patenterteilung: **15.05.1996**
(21) Anmeldenummer: 92119150.8
(22) Anmeldetag: 09.11.1992
(51) Int. Cl.: G08B 13/193

(54) **Passiv-Infrarot-Bewegungsmelder**
Passive infra-red movement detector
Détecteur passif de mouvement à infrarouge

(30) Priorität: 15.11.1991 DE 4137560
(43) Veröffentlichungstag der Anmeldung: 19.05.1993
(73) Patentinhaber: ABB PATENT GmbH, D-68309 Mannheim (DE)
(72) Erfinder: Eberwein, Helmut, W-5880 Lüdenscheid (DE); Blomberg, Lothar, W-5982 Neuenrade (DE)
(74) Vertreter: Rupprecht, Klaus, Dipl.-Ing.

(56) Entgegenhaltungen:
- EP-A- 0 069 782
- WO-A-91/06837
- US-A- 4 930 864

## Beschreibung

Die Erfindung betrifft einen Passiv-Infrarot-Bewegungsmelder (PIR-Melder) nach dem Oberbegriff des Anspruches 1.

Ein PIR-Melder ist im wesentlichen eine Vorrichtung, die in Abhängigkeit von der detektierten Infrarotstrahlung eines Wärmestrahlung emittierenden Objektes einen Schaltvorgang auslöst. Er dient dazu, einen Raumbereich auf sich bewegende Objekte zu überwachen, und reagiert z.B. auf die Änderung der Wärmestrahlung im zu überwachenden Erfassungsbereich. Ein Infrarot-Strahlungsobjekt ist z.B. ein Mensch, der in einen zu überwachenden Raum eindringt oder sich in diesem bewegt. Der PIR-Melder arbeitet lediglich als Empfänger infraroter Wärmestrahlung, wohingegen Infrarot-Bewegungsmelder anderer Art einen aktiven Infrarotsender aufweisen.

Bei PIR-Meldern mit einem azimutalen Erfassungswinkel bis zu 180° ist es z. B. aus DE 86 14 679 U1 bekannt, eine Sammeloptik für IR-Strahlung mit Hilfe einer Fresnell-Kunststofflinse als Teil eines Zylinders in einem Gehäuse anzuordnen.

Aus der europäischen Patentschrift EP 0 113 468 ist ein PIR-Melder mit einem azimutalen Erfassungswinkel von 180° bekannt, welcher im Inneren eines Gehäuses einen infrarotempfindlichen Sensor aufweist. Im Gehäuse sind fensterartige Durchbrüche vorhanden, in welchen sich eine Weitwinkelsammeloptik, insbesondere eine Fresnell-Kunststofflinse, befindet. Hierbei werden aus dem zu überwachenden Erfassungsbereich frontal einfallende Infrarotstrahlen direkt auf den Infrarotsensor gebündelt, während lateral aus dem Erfassungsbereich einfallende Infrarotstrahlen erst nach Zwischenreflektion an einem Umlenkspiegel-System auf den Infrarotsensor fokussiert werden. Die Ansprechempfindlichkeit dieses PIR-Melders ist somit sehr stark abhängig vom Einfallwinkel der Wärmestrahlen.

Ein azimutaler Erfassungswinkel von 180° ist dort völlig ausreichend, wo der PIR-Melder an einer Wand befestigt wird und nur den vor dieser Wand liegenden Raum zu überwachen hat. Soll jedoch eine Rundumüberwachung eines großen Innen- oder Außenraumes erfolgen, oder soll ein freistehendes Haus von allen Seiten überwacht werden, so gelingt das nur mit einem PIR-Melder, der einen azimutalen Erfassungsbereich von 360° aufweist. Dieser ist aber dann bei entsprechender Anordnung, z.B. auf dem Dach eines Hauses in der Lage, mehrere, anderenfalls um das Haus herum anzuordnende übliche PIR-Melder zu ersetzen.

Einen PIR-Melder mit einem azimutalen Erfassungswinkel von 360° beschreibt die EP 0 069 782 A1, doch werden bei dieser Anordnung die IR-Strahlen über zwei Spiegel umgelenkt, was zu einer entsprechenden Schwächung der zu detektierenden Wärmestrahlung führt.

Aus der US-PS 3,226,557 ist ein Strahlungsdetektor bekannt, mit dem es möglich ist, azimutal einfallende Infrarotstrahlung in einem Bereich von 360° zu erfassen. Hierzu ist in einem zylindrischen Gehäuse ein sich über den ganzen Umfang des Zylindermantels erstreckendes Fenster ausgebildet, über das die im wesentlichen horizontal einfallenden Wärmestrahlen auf die spiegelnde Oberfläche eines Kegels gelangen und von diesem auf einen Infrarotdetektor umgelenkt werden.

Sofern es möglich ist, einen PIR-Melder relativ dicht über dem Boden anzuordnen, genügt ein im wesentlichen horizontaler Empfangsbereich, mit einer relativ kleinen vertikalen Komponente. Soll jedoch ein Unterkriechen des Erfassungsbereiches des PIR-Detektors ausgeschlossen werden, so muß dieser in der Lage sein, entsprechend seinem Abstand zur Bodenfläche auch solche Wärmestrahlen zu erfassen, die eine relativ große vertikale Komponente besitzen. Weiterhin sollte die Empfindlichkeit im gesamten erfaßten Raumbereich in grober Näherung gleich sein, es sei denn, aufgrund der örtlichen Verhältnisse wäre eine individuelle Anpassung der Erfassungscharakteristik erwünscht. Bekannte Sensoren zur Erfassung von Wärmestrahlen besitzen zur Erzeugung von Temperaturdifferenzen zwei, in der Regel rechteckig nebeneinander angeordnete Elektroden. Bei einer solchen Geometrie des Detektors kann keine nach allen Seiten hin gleichmäßige Empfindlichkeit erwartet werden.

Aufgabe der Erfindung ist es, einen PIR-Melder nach dem Oberbegriff des Anspruches 1 mit einem horizontalen Erfassungswinkel von 360° so zu verbessern, daß mit möglichst geringem Aufwand eine möglicht gleichmäßige Empfindlichkeit des PIR-Melders über den gesamten Raumwinkel seines Erfassungsbereiches erzielt wird, und daß dieser auch Wärmestrahlen mit einer vergrößerten vertikalen Komponente ihres Einfallwinkels erfaßt.

Diese Aufgabe wird durch die in Anspruch 1 gekennzeichneten Merkmale gelöst. Zweckmäßige Ausgestaltungen und Weiterbildungen des Erfindungsgegenstandes sind in den Unteransprüchen genannt.

Durch das Einsetzen einer als Fresnellinse gestalteten, aus einer Vielzahl von einzelnen Sammellinsen bestehenden Multilinse in das Gehäusefenster des PIR-Melders, gelingt es, auch Wärmestrahlen mit relativ großer vertikaler Komponente zu erfassen. Vor allem, wenn Segmente mit Fresnellinsen im Bereich der unteren Kante der Multilinse angeordnet und ggf. auch noch azentrisch ausgebildet sind, wird der vertikale Erfassungsbereich des PIR-Melders wesentlich erweitert. Da die Fresnellinsen in einer relativ dünnen Kunststoffolie ausgebildet sind, kann diese sehr gut der rotationssymmetrischen Form des Gehäusemantels angepaßt werden, indem die streifenförmige Kunststoffolie zu einer dem Gehäusemantel entsprechenden zylindrischen oder konischen Form gebogen wird. Ihre beiden freien Enden müssen dabei als Stoßkanten maßhaltig aufeinandertreffen. Für eine gleichmäßige Aufnahmecharakteristik über den gesamten Aufnahmebereich von 360° ist es von entscheidender Bedeutung, daß die beiden Elektroden des Infrarotsensors koaxial zur optischen Achse der auf seine Sensorfläche auftreffenden Wärmestrahlen angeordnet sind.

Bei einer zylindrischen Form des Gehäusemantels kann die streifenförmige Kunststoffolie die Form eines Rechtecks oder besser noch die Form eines Parallelogramms erhalten, weil dann die Stoßkante nicht parallel, sondern schräg zur Mantellinie des Gehäuses verläuft, so daß die von der Stoßkante ausgehende Störung im Aufnahmebereich der Wärmestrahlen sich über einen größeren Aufnahmewinkel verteilt.

Bei einer konischen Form des Gehäusemantels, die eine bessere Berücksichtigung von Wärmestrahlen mit starker vertikaler Komponente ermöglicht, wird man der streifenförmigen Kunststoffolie die Form eines Kreisringabschnitts geben.

Um eine gleichmäßige Rundumempfindlichkeit des PIR-Melders zu erzielen, ist es vorteilhaft, die Linsen so auf die Abmessungen der streifenförmigen Kunststoffolie abzustimmen, daß im Bereich ihrer Stoßkante nur eine minimale Fehlleitung von Wärmestrahlen auftritt.

Eine weitere Verbesserung der Empfindlichkeit des PIR-Melders in vertikaler Richtung ist dadurch erreichbar, daß eine weitere, zweite Kunststoffolie in einem weiteren oder entsprechend vergrößerten Gehäusefenster in einer horizontalen und/oder einer zwischen der Horizontale und der Vertikale liegenden Zwischenlage angeordnet ist, und diese die in entsprechender Richtung mit vertikaler Komponente einfallenden Wärmestrahlen erfaßt.

Hierbei bieten sich verschiedene Möglichkeiten der Ausgestaltung an. So ist es möglich, die zweite Kunststoffolie an der Unterseite des Gehäuses im Bereich des Infrarotsensors dem ersten rotationssymetrischen Spiegelkörper gegenüberliegend, koaxial zur Mittelachse anzuordnen. Von unten kommende, am Infrarotsensor vorbeilaufende Wärmestrahlen können dabei auf den ersten Spiegelkörper treffen, der in diesem, an seinem breiten Ende liegenden Bereich durch eine konkave Formgebung entlang seiner Mantellinie einem Hohlspiegel gleicht, der die Wärmestrahlen zum Infrarotsensor umlenkt.

Eine weitere Möglichkeit besteht darin, die zweite Kunststoffolie an der Unterseite des Gehäuses so anzuordnen, daß sie nunmehr hinter dem ersten Spiegelkörper gegenüber vom Infrarotsensor liegt und von unten kommende, am ersten Spiegelkörper vorbeilaufende Wärmestrahlen unmittelbar auf den Infrarotsensor auftreffen und/oder über die Innenfläche eines zweiten rotationssymmetrischen Spiegelkörpers auf den Infrarotsensor umgelenkt werden.

Ein unmittelbares Auftreffen von Wärmestrahlen auf den Infrarotsensor wird man nur dort zulassen, wo bewußt eine Bevorzugung vertikal einfallender Wärmestrahlen erfolgen soll. Anderenfalls wird man diese Strahlen durch ein zwischengelegtes Filter dämpfen.

In einer weiteren zweckmäßigen Ausgestaltung des Erfindungsgegenstandes ist vorgesehen, die in der zweiten Kunststoffolie ausgebildeten Sammellinsen um den im Lichteinfallbereich liegenden ersten und zweiten rotationssymmetrischen Spiegelkörper oder um den Infrarotsensor so anzuordnen, daß mindestens ein konzentrischer Linsenring gebildet wird. Zur Bevorzugung vertikaler Strahlung ist es möglich, in der zweiten Folie im axialen Bereich des ersten und zweiten rotationssymmetrischen Körpers ein Zentralsegment mit mindestens einer Sammellinse anzuordnen, so daß vertikal einfallende Wärmestrahlen fokussiert und durch die hohlen Spiegelkörper unmittelbar auf den Infrarotsensor gelenkt werden.

Um definierte Strahlenverläufe zu erhalten, ist es von Vorteil, mindestens einen der beiden rotationssymmetrischen Spiegelkörper entlang seiner Mantellinie facettenartig aufzuteilen, so daß sich eine Vielzahl schmaler Spiegelebenen ergibt, die mindestens teilweise den Spiegelkörpermantel bilden.

Um eine möglichst gleichmäßige Aufnahmeempfindlichkeit des PIR-Melders im gesamten horizontalen und unteren vertikalen Bereich zu erzielen, kann man mehrere mit Sammellinsen versehene Kunststoffolien so anordnen, daß sie gemeinsam den Infrarotsensor umschließen und ihre Mantellinien ein Polygon bilden, das symmetrisch zur Mittelachse liegt. Durch eine entsprechende Ausrichtung der Sammellinsen und eine geeignete Anordnung eines oder mehrerer Spiegelkörper, können die einfallenden Wärmestrahlen so ausgerichtet werden, daß sie direkt oder durch Umlenkung mit Hilfe von Spiegeln auf den Infrarotsensor treffen.

Ausführungsbeispiele der Erfindung sind in den Zeichnungen dargestellt und werden im folgenden näher beschrieben.

Es zeigen:
- Fig. 1: einen PIR-Melder seitlich, teilweise im Schnitt mit dem Verlauf horizontal einfallender Wärmestrahlen a,a',
- Fig. 1a: zeigt die Sensorfläche des IR-Reglers mit konzentrischer Anordnung der Elektroden,
- Fig. 2: den Strahlenverlauf von horizontal einfallenden Strahlen a, a' und Wärmestrahlen b, b' mit starker vertikaler Komponente,
- Fig. 3: den Strahlenverlauf von Wärmestrahlen c bis e mit unterschiedlicher vertikaler Komponente,
- Fig. 4: eine als Multilinse ausgebildete zweite Kunststoffolie mit zwei Linsenringen und einem Zentralsegment,
- Fig. 5: den Strahlenverlauf mehrerer Strahlen c bis f mit unterschiedlicher vertikaler Komponente und zwei rotationssymmetrischen Spiegelkörpern,
- Fig. 6: ein aus mehreren Kunststoffolien gebildetes Polygon, zur Erfassung einer Rundumstrahlung im horizontalen und unteren vertikalen Bereich.

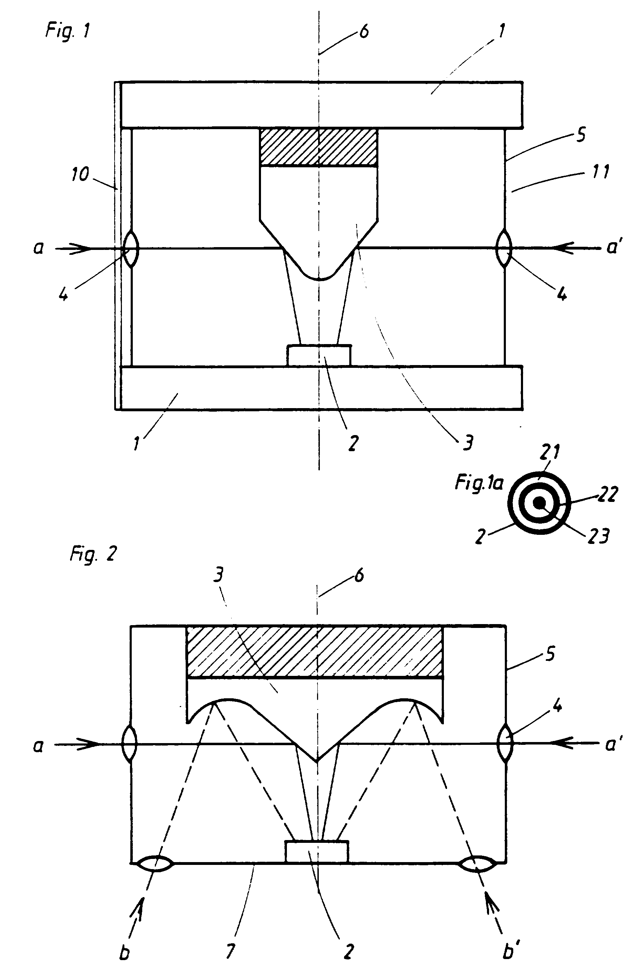

Wie die schematische Darstellung nach Fig. 1 verdeutlichen soll, besitzt der PIR-Melder ein rotationssymmetrisches Gehäuse 1, das eine der Darstellung entsprechende zylindrische Form besitzt, oder auch - wie nicht dargestellt -, konisch nach unten sich verjüngend ausgebildet sein kann. Das Gehäuse 1 ist mit einem im Gehäusemantel rundum laufenden ihn durchbrechenden Fenster 11 versehen, durch das Wärmestrahlung in das Innere des Gehäuses eindringen kann. In das Gehäusefenster 11 ist eine ebenfalls entlang der Mantellinie des Gehäuses rundum laufende Kunststoffolie 5 eingepaßt, die mit einer Vielzahl einzelner als Fresnellinsen gestalteter Sammellinsen versehen ist. Das jeweilige Zentrum der Sammellinsen 4 ist zur Vedeutlichung des Strahlenverlaufs durch eine kleine konvexe Linse angedeutet. Der Aufbau einer derartigen Multilinse ist hinreichend bekannt, z. B. aus der bereits genannten EP-A-113 468 oder aus der DE 39 32 943 A1,so daß weitere Erläuterungen hierzu überflüssig sind. Zum Schutz der kratzempfindlichen ersten Kunststoffolie 5 kann das Gehäusefenster 11 nach außen durch eine Schutzfolie 10 geschlossen werden.

Im Inneren des Gehäuses 1 befindet sich ein rotationssymmetrischer erster Spiegelkörper 3, dessen spitzes Ende einem Infrarotsensor 2 zugewandt ist. Horizontal einfallende Wärmestrahlen a, a' und auch Strahlen mit einer zu großen vertikalen Komponente gelangen über die Sammellinsen 4 der ersten Kunststoffolie 5 auf die reflektierende Fläche des ersten Spiegelkörpers 3 und werden an dieser zum Infrarotsensor 2 umgelenkt.

Fig. 1a ermöglicht einen Blick auf die Sensorfläche 21 des Infrarotsensors und läßt dadurch die besondere konzentrische Anordnung der beiden Elektroden 22,23 erkennen.

Fig. 2 entspricht, bezüglich der Anordnung des ersten Spiegelkörpers 3 zum Infrarotsensor 2, dem bereits in Fig. 1 dargestellten Aufbau. Außer einer mit Sammellinsen versehenen vertikalen ersten Kunststoffolie 5 ist noch eine, nunmehr horizontal angeordnete, ebenfalls mit Sammellinsen versehene zweite Kunststoffolie 7 hinter dem Infrarotsensor 2 angeordnet. Diese zweite Kunststoffolie 7 ermöglicht es, auch Wärmestrahlen mit starker vertikaler Komponente aus dem Raumbereich unter dem PIR-Melder zu erfassen und dem ersten Spiegelkörper 3 zuzuleiten. Um eine geeignete Strahlenumlenkung zu ermöglichen, ist der erste Spiegelkörper 3 so geformt, daß er ausgehend vom sich verjüngenden Teil seiner konischen Form in einer konkaven Kurve sich verbreitert und dadurch einen ringartigen Hohlspiegel bildet.

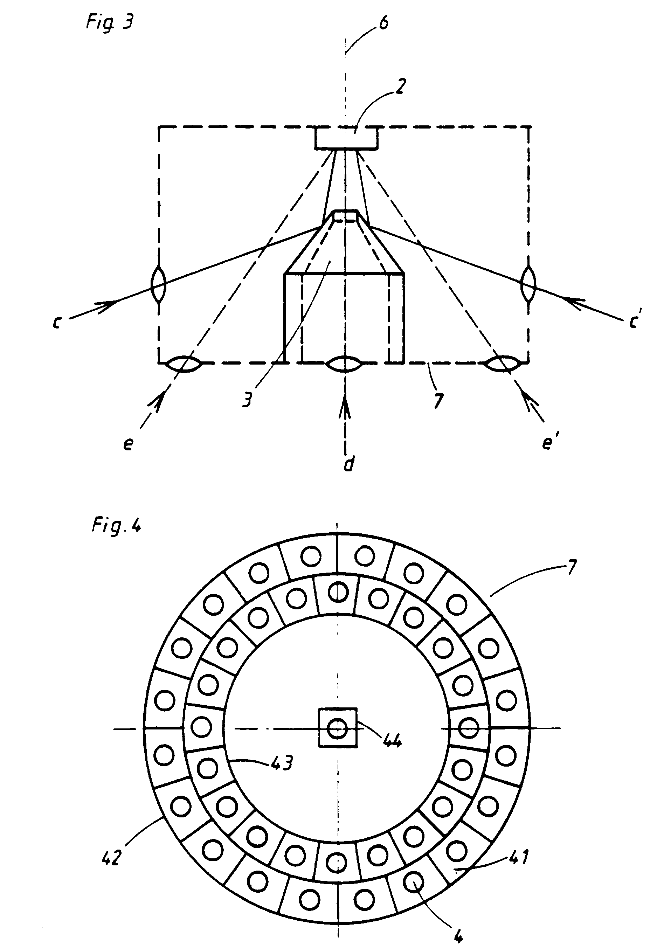

Bei der Anordnung nach Fig. 3 liegt im Gegensatz zu den Figuren 1 und 2 der erste Spiegelkörper 3 auf der Unterseite und dementsprechend der Infrarotsensor 2 auf der Oberseits des PIR-Melders. Durch diese Anordnung ist es möglich, Wärmestrahlen mit kleiner und auch großer vertikaler Komponente trotz der rein konischen Form des ersten Spiegelkörpers 3 dem Infrarotsensor 2 zuzuführen. Der erste Spiegelkörper 3 ist im vorliegenden Fall als Hohlkörper ausgebildet, so daß vertikal einfallende Wärmestrahlen d durchdringen können und dadurch direkt auf den Infrarotsensor 2 auftreffen. Außer den in bekannter Weise umgelenkten Wärmestrahlen c, c' gelangen weitere, am Spiegelkörper 3 vorbeigeleitete Wärmestrahlen e unmittelbar zum Infrarotsensor 2. Da ein direkter Einfall von Wärmestrahlen d, e zu einer erhöhten Empfindlichkeit des PIR-Melders im vertikalen Bereich führt, muß diese durch das Einsetzen entsprechender Filter gedämpft werden, sofern eine Bevorzugung bestimmter Raumbereiche unerwünscht ist.

Fig. 4 zeigt die mit Linsen versehene zweite Kunststoffolie 7, die entsprechend den Figuren 2 und 3 auf der Unterseite des PIR-Melders anzuordnen ist. Hierzu sind zwei, aus einzelnen Linsensegmenten 41 bestehende Linsenringe 42, 43 koaxial zur Mittelachse des PIR-Melders angeordnet. Im Zentrum der beiden Linsenringe 42, 43 befindet sich ein Zentralsegment 44, das ebenfalls eine Linse enthält, aber nur in Verbindung mit der Anordnung nach Fig. 3 zur Anwendung kommt, da nach Fig. 2 in diesem Bereich jegliche Strahlung unterdrückt wird.

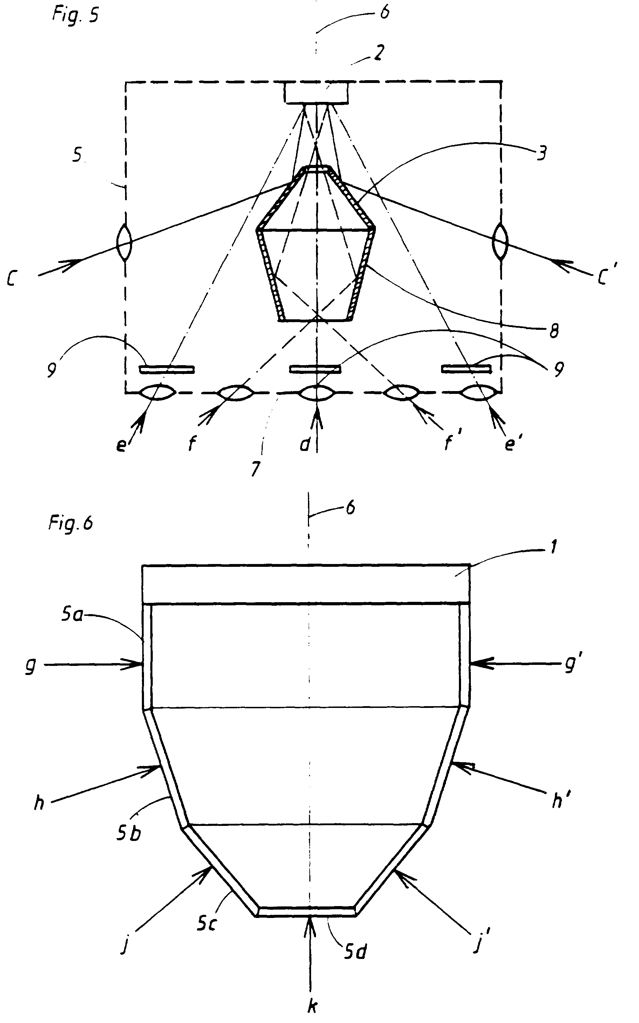

Die Anordnung nach Fig. 5 entspricht in ihrem Grundaufbau der Fig. 3. Bei diesem Ausführungsbeispiel wurde jedoch besonderer Wert auf eine gleichmäßige Empfindlichkeit des PIR-Melders im gesamten Erfassungsbereich gelegt. Soweit bestimmte Wärmestrahlen, wie die Strahlen e, e' und d direkt zum Infrarotsensor 2 gelangen, ist ein Filter 9 zwischengelegt, das die Strahlungsintensität soweit schwächt, daß sie der Intensität umgelenkter Strahlen c, c' entspricht. Ein unterhalb des ersten Spiegelkörpers 3 angeordneter zweiter rotationssymmetrischer Spiegelkörper 8 hat die Aufgabe, mit Hilfe seiner verspiegelten Innenfläche Wärmestrahlen f, f' in einem anderenfalls nicht erfaßbaren bestimmten Zwischenbereich, mit relativ großer vertikaler Komponente dem Infrarotsensor 2 zuzuführen.

Fig. 6 zeigt, daß es von Vorteil ist, zur gleichmäßigen Erfassung aller vom horizontalen bis zum unteren vertikalen Bereich einfallenden Wärmestrahlen mehrere, mit Sammellinsen versehene Kunststoffolien 5a bis 5d schalenartig um den Infrarotsensor 2 herum anzuordnen. In Verbindung mit einem oder mehreren Spiegelkörpern gelingt es einen PIR-Melder aufzubauen, der eine sehr gleichmäßige Ansprechcharakteristik aufweist. Dieser hat nicht nur einen Erfassungsbereich von 360° azimutal, sondern bietet außerdem einen sicheren Unterkriechschutz.

## Patentansprüche

1. Passiv-Infrarot-Bewegungsmelder, mit mindestens einem, innerhalb eines Gehäuses (1) angeordneten Infrarotsensor (2) und einem lichtdurchlässigen Gehäusefenster (11), das in einem den Infrarotsensor (2) kreisförmig umschließenden Gehäusemantel einen azimutalen Erfassungswinkel von 360° ermöglicht und die durch das Gehäusefenster (11) einfallenden Wärmestrahlen über die Außenfläche eines ersten rotationssymmetrischen Spiegelkörpers (3) so abgelenkt werden, daß sie auf die Sensorfläche (21) des Infrarotsensors (2) fallen, **dadurch gekennzeichnet**, daß eine mit einer Vielzahl von einzelnen, als Fresnellinsen ausgebildeten Sammellinsen (4) versehene streifenförmige, erste Kunststoffolie (5) so bemessen und in das Gehäusefenster (11) eingesetzt ist, daß sie sich der zylindrischen oder konischen Form des Gehäusemantels (12) anpaßt und ihre beiden freien Enden als Stoßkanten maßhaltig aufeinandertreffen und Elektroden (22, 23) des Infrarotsensors (2) koaxial zur optischen Achse (6) der auf seine Sensorfläche (21) auftreffenden Wärmestrahlen angeordnet sind.

2. Passiv-Infrarot-Bewegungsmelder nach Anspruch 1, dadurch gekennzeichnet, daß die erste Kunststoffolie (5) die Form eines Parallelogramms oder die Form eines Kreisringabschnitts besitzt.

3. Passiv-Infrarot-Bewegungsmelder nach einem der vorhergehenden Ansprüche, dadurch gekennzeichnet, daß außer der zylindrisch oder konisch zur Mittelachse des Gehäuses (1) angeordneten ersten Kunststoffolie (5), die zur Aufnahme der im wesentlichen mit einer horizontalen Komponente einfallenden Wärmestrahlen dient, mindestens eine weitere, zweite Kunststoffolie (7) in einem weiteren oder entsprechend vergrößerten Gehäusefenster in einer horizontalen und/oder einer zwischen der Horizontale und der Vertikale liegenden Zwischenlage angeordnet ist, und diese die in entsprechender Richtung mit vertikaler Komponente einfallenden Wärmestrahlen erfaßt.

4. Passiv-Infrarot-Bewegungsmelder nach Anspruch 3, dadurch gekennzeichnet, daß die zweite Kunststoffolie (7) an der Unterseite des Gehäuses (1) im Bereich des Infrarotsensors (2) dem ersten rotationssymmetrischen Spiegelkörper (3) gegenüberliegend, koaxial zur Mittelachse (6) angeordnet ist und von unten kommende, am Infrarotsensor (2) vorbeilaufende Wärmestrahlen (b,b') auf den ersten Spiegelkörper (3) treffen, der in diesem Bereich durch eine konkave Formgebung entlang seiner Mantellinie einem Hohlspiegel gleich die Wärmestrahlen zum Infrarotsensor (2) umlenkt.

5. Passiv-Infrarot-Bewegungsmelder nach Anspruch 3, dadurch gekennzeichnet, daß die zweite Kunststoffolie (7) an der Unterseite des Gehäuses (1) angeordnet ist, die hinter dem ersten Spiegelkörper (3) gegenüber vom Infrarotsensor (2) liegt und von unten kommende, am ersten Spiegelkörper (3) vorbeilaufende Wärmestrahlen (e, e') unmittelbar auf den Infrarotsensor (2) auftreffen und/oder Wärmestrahlen (f,f') über die Innenfläche eines hohlen, zweiten rotationssymmetrischen Spiegelkörpers (8) auf diesen umgelenkt sind.

6. Passiv-Infrarot-Bewegungsmelder nach Anspruch 5, dadurch gekennzeichnet, daß der erste Spiegelkörper (3) hohl ist und im Bereich der Mittelachse (6) einfallende Wärmestrahlen (d) durch seine trichterartige Form direkt oder durch ein zwischengelegtes Filter (9) gedämpft auf den Infrarotsensor (2) auftreffen.

7. Passiv-Infrarot-Bewegungsmelder nach einem der vorhergehenden Ansprüche, dadurch gekennzeichnet, daß die in der ersten Kunststoffolie (5) ausgebildeten Sammellinsen so auf deren Abmessungen abgestimmt sind, daß im Bereich ihrer Stoßkante zwischen zwei Linsen eine Fehlleitung der einfallenden Wärmestrahlen weitgehend vermieden ist.

8. Passiv-Infrarot-Bewegungsmelder nach einem der Ansprüche 4 bis 6, dadurch gekennzeichnet, daß die in der zweiten Kunststoffolie (7) ausgebildeten Sammellinsen um den im Lichteinfallbereich liegenden ersten und zweiten rotationssymmetrischen Spiegelkörper (3, 8) oder den Infrarotsensor (2) mindestens einen konzentrischen Linsenring (42, 43) bilden.

9. Passiv-Infrarot-Bewegungsmelder nach Anspruch 8, dadurch gekennzeichnet, daß in der zweiten Folie im axialen Bereich des ersten und zweiten rotationssymmetrischen Spiegelkörpers (3, 8) ein Zentralsegment (44) mit mindestens einer Sammellinse angeordnet ist.

10. Passiv-Infrarot-Bewegungsmelder nach einem der Ansprüche 5-9, dadurch gekennzeichnet, daß mindestens einer der beiden rotationssymmetrischen Spiegelkörper (3, 8) entlang seiner Mantellinie facettenartig aufgeteilt ist, so daß sich eine Vielzahl schmaler Spiegelebenen ergibt, die mindestens teilweise den jeweiligen Spiegelkörpermantel bilden.

11. Passiv-Infrarot-Bewegungsmelder nach einem der vorhergehenden Ansprüche, dadurch gekennzeichnet, daß mehrere mit Sammellinsen (4) versehene Kunststoffolien (5, 7) einen gemeinsamen Infrarotsensor (2) so umschließen, daß ihre Mantellinien ein Polygon bilden, das symmetrisch zur Mittelachse (6) liegt und durch entsprechende Ausrichtung der Sammellinsen und eine geeignete Anordnung eines oder mehrerer Spiegelkörper (3, 8) die einfallenden Wärmestrahlen (f bis j) so ausgerichtet sind, daß sie direkt oder durch Umlenkung auf den Infrarotsensor (2) treffen.

## Claims

1. Passive infrared motion detector having at least one infrared sensor (2) arranged inside a housing (1) and a transparent housing window (11) which permits an azimuthal detection angle of 360° in a housing lateral surface surrounding the infrared sensor (2) in a circular fashion, and the heat rays incident through the housing window (11) are deflected via the outer surface of a first rotationally symmetrical reflecting body (3) in such a way that they impinge on the sensor surface (21) of the infrared sensor (2), characterized in that a strip-shaped first plastic film (5), which is provided with a multiplicity of individual positive lenses (4) constructed as Fresnel lenses, is dimensioned and is inserted into the housing window (11) such that it is adapted to the cylindrical or conical shape of the housing lateral surface (12) and its two free ends meet one another accurately as abutting edges, and electrodes (22, 23) of the infrared sensor (2) are arranged coaxially with the optical axis (6) of the heat rays impinging on its sensor surface (21).

2. Passive infrared motion detector according to Claim 1, characterized in that the first plastic film (5) has the shape of a parallelogram or the shape of an annular section.

3. Passive infrared motion detector according to one of the preceding claims, characterized in that in addition to the first plastic film (5), which is arranged cylindrically or conically relative to the central axis of the housing (1) and serves to detect the heat rays incident essentially with a horizontal component, at least one further, second plastic film (7) is arranged in a further or correspondingly enlarged housing window in a horizontal intermediate position and/or an intermediate position situated between the horizontal and the vertical, and said intermediate position detects the heat rays incident in the corresponding direction with a vertical component.

4. Passive infrared motion detector according to Claim 3, characterized in that the second plastic film (7) is arranged, coaxially with the central axis (6), on the underside of the housing (1) in the region of the infrared sensor (2) and opposite the first rotationally symmetrical reflecting body (3), and heat rays (b, b') which come from below and pass by the infrared sensor (2) impinge on the first reflecting body (3), which in this region owing to a concave shape along its generatrix deflects the heat rays to the infrared sensor (2) in a manner similar to a concave mirror.

5. Passive infrared motion detector according to Claim 3, characterized in that the second plastic film (7) is arranged on the underside of the housing (1), which underside is situated behind the first reflecting body (3) opposite the infrared sensor (2), and heat rays (e, e') which come from below and pass by the first reflecting body (3) impinge directly on the infrared sensor (2), and/or heat rays (f, f') are deflected onto a hollow, second rotationally symmetrical reflecting body (8) via the inner surface thereof [sic].

6. Passive infrared motion detector according to Claim 5, characterized in that the first reflecting body (3) is hollow, and heat rays (d) incident in the region of the central axis (6) impinge on the infrared sensor (2) in a fashion attenuated directly by the funnel-like shape of said reflecting body or by an interposed filter (9).

7. Passive infrared motion detector according to one of the preceding claims, characterized in that the positive lenses constructed in the first plastic film (5) are matched to the dimensions of said film so as largely to prevent a misconductance of the incident heat rays in the region of their abutting edge between two lenses.

8. Passive infrared motion detector according to one of Claims 4 to 6, characterized in that the positive lenses constructed in the second plastic film (7) form at least one concentric lens ring (42, 43) around the first and second rotationally symmetrical reflecting bodies (3, 8) situated in the light incidence region, or around the infrared sensor (2).

9. Passive infrared motion detector according to Claim 8, characterized in that a central segment (44) having at least one positive lens is arranged in the second film in the axial region of the first and second rotationally symmetrical reflecting bodies (3, 8).

10. Passive infrared motion detector according to one of Claims 5-9, characterized in that at least one of the two rotationally symmetrical reflecting bodies (3, 8) is split up in a faceted fashion along its generatrix so as to produce a multiplicity of narrow reflecting planes which at least partly form the respective lateral surface of the reflecting body.

11. Passive infrared motion detector according to one of the preceding claims, characterized in that a plurality of plastic films (5, 7) provided with positive lenses (4) surround a common infrared sensor (2) such that their generatrices form a polygon which is situated symmetrically relative to the central axis (6), and by means of an appropriate alignment of the positive lenses and a suitable arrangement of one or more reflecting bodies (3, 8), the incident heat rays (f to j) are aligned such that they impinge directly or by deflection on the infrared sensor (2).

## Revendications

1. Détecteur passif de mouvement à infrarouge comprenant au moins un capteur infrarouge (2) disposé à l'intérieur d'un boîtier (1) et une fenêtre de boîtier (11) perméable à la lumière qui permet, dans une enveloppe de boîtier entourant circulairement le capteur infrarouge (2), un angle de détection azimutal de 360°, les rayons thermiques pénétrant par la fenêtre de boîtier (11) étant déviés par la surface extérieure d'un premier corps réfléchissant (3) de révolution de manière à tomber sur la surface sensible (21) du capteur infrarouge (2), caractérisé par le fait qu'une première feuille de matière plastique (5) en forme de bande, munie d'une multitude de lentilles collectrices (4) élémentaires réalisées sous la forme de lentilles de Fresnel, est dimensionnée et placée dans la fenêtre de boîtier (11) de telle manière qu'elle s'adapte à la forme cylindrique ou conique de l'enveloppe de boîtier (12) et que ses deux extrémités libres se raccordent de façon jointive, et que des électrodes (22,23) du capteur infrarouge (2) sont disposées coaxialement à l'axe optique (6) des rayons thermiques tombant sur sa surface sensible (21).

2. Détecteur passif de mouvement à infrarouge suivant la revendication 1, caractérisé par le fait que la première feuille de matière plastique (5) présente la forme d'un parallélogramme ou la forme d'un segment de couronne circulaire.

3. Détecteur passif de mouvement à infrarouge suivant l'une des revendications précédentes, caractérisé par le fait qu'en plus de la première feuille de matière plastique (5) disposée en cylindre ou en cône par rapport à l'axe médian du boîtier (1) et servant à recevoir les rayons thermiques incidents présentant essentiellement une composante horizontale, il est prévu au moins une seconde feuille de matière plastique (7) disposée dans une fenêtre de boîtier supplémentaire ou agrandie en conséquence, dans une position horizontale et/ou une position intermédiaire entre l'horizontale et la verticale, cette deuxième feuille recevant les rayons thermiques arrivant suivant une direction correspondante avec une composante verticale.

4. Détecteur passif de mouvement à infrarouge suivant la revendication 3, caractérisé par le fait que la deuxième feuille de matière plastique (7) est disposée sur le côté inférieur du boîtier (1) dans la zone du capteur infrarouge (2) en face du premier corps réfléchissant (3) de révolution, coaxialement à l'axe médian (6), et que les rayons lumineux (b,b') arrivant depuis le bas et passant autour du capteur infrarouge (2) tombent sur le premier corps réfléchissant (3) qui, dans cette zone, par une conformation concave le long de sa génératrice, dévie à la manière d'un miroir creux les rayons thermiques vers le capteur infrarouge (2).

5. Détecteur passif de mouvement à infrarouge suivant la revendication 3, caractérisé par le fait que la deuxième feuille de matière plastique (7) est disposée sur le côté inférieur du boîtier (1) et est située derrière le premier corps réfléchissant (3) en face du capteur infrarouge (2) et que les rayons thermiques (e,e';f,f') arrivant depuis le bas et passant autour du premier corps réfléchissant (3) tombent directement sur le capteur infrarouge (2) et/ou sont déviés sur ce dernier par la surface intérieure d'un deuxième corps réfléchissant (8) creux de révolution.

6. Détecteur passif de mouvement à infrarouge suivant la revendication 5, caractérisé par le fait que le premier corps réfléchissant (3) est creux et que les rayons thermiques (d) arrivant dans la zone de l'axe médian (6), grâce à sa forme en entonnoir, tombent directement ou de façon atténuée par un filtre intermédiaire (9) sur le capteur infrarouge (2).

7. Détecteur passif de mouvement à infrarouge suivant l'une des revendications précédentes, caractérisé par le fait que les lentilles collectrices formées dans la première feuille de matière plastique (5) sont accordées aux dimensions de cette dernière de manière à éviter dans une large mesure, dans la zone du joint entre les bords de cette feuille, situé entre deux lentilles, une perturbation de la marche des rayons thermiques incidents.

8. Détecteur passif de mouvement à infrarouge suivant l'une des revendications 4 à 6, caractérisé par le fait que les lentilles collectrices formées dans la deuxième feuille de matière plastique (7) forment au moins un anneau concentrique de lentilles (42,43) autour du premier et deuxième corps réfléchissants (3,8) de révolution situés dans la zone d'incidence de lumière ou autour du capteur infrarouge (2).

9. Détecteur passif de mouvement à infrarouge suivant la revendication 8, caractérisé par le fait qu'un segment central (44) avec au moins une lentille collectrice est disposé dans la deuxième feuille dans la zone axiale du premier et deuxième corps réfléchissants (3,8) de révolution.

10. Détecteur passif de mouvement à infrarouge suivant l'une des revendications 5 à 9, caractérisé par le fait qu'au moins l'un des deux corps réfléchissants (3,8) de révolution est subdivisé en facettes le long de sa génératrice de manière que soit formée une multitude de plans réfléchissants étroits qui forment au moins partiellement l'enveloppe du corps réfléchissant respectif.

11. Détecteur passif de mouvement à infrarouge suivant l'une des revendications précédentes, caractérisé par le fait que plusieurs feuilles de matière plastique (5,7) munies de lentilles collectrices (4) entourent un capteur infrarouge (2) commun de telle manière que leurs génératrices forment un polygone qui est situé symétriquement par rapport à l'axe médian et que par une orientation correspondante des lentilles collectrices et un agencement approprié d'un ou de plusieurs corps réfléchissants (3,8), les rayons thermiques (f à j) incidents sont orientés de manière à tomber directement ou par déviation sur le capteur infrarouge (2).
